# EUROPEAN PATENT SPECIFICATION

(11) **EP 2 456 248 B1**
(45) Date of publication and mention of the grant of the patent: **18.05.2016**
(21) Application number: 09848404.1
(22) Date of filing: 10.12.2009
(51) Int. Cl.: H04W 16/00

(54) **METHOD AND APPARATUS FOR TERMINATING LOCATION PROCESS**
VERFAHREN UND VORRICHTUNG FÜR DEN ABSCHLUSS EINES LOKALISIERUNGSVORGANGS
PROCÉDÉ ET DISPOSITIF POUR TERMINER UN PROCESSUS DE LOCALISATION

(30) Priority: 17.08.2009 CN 200910090971
(43) Date of publication of application: 23.05.2012
(73) Proprietor: ZTE Corporation, Shenzhen, Guangdong 518057 (CN)
(72) Inventor: WU, Hao, Shenzhen Guangdong 518057 (CN); GAO, Yin, Shenzhen Guangdong 518057 (CN); HUANG, Yada, Shenzhen Guangdong 518057 (CN); HUANG, Bo, Shenzhen Guangdong 518057 (CN)
(74) Representative: V.O.
(86) International application number: PCT/CN2009/075465
(87) International publication number: WO 2011/020263

(56) References cited:
- WO-A1-2007/002303
- CN-A- 1 710 986
- CN-A- 1 960 572
- CN-A- 101 022 362
- US-A1- 2006 172 744
- US-A1- 2007 149 213
- US-A1- 2007 155 400
- US-A1- 2009 066 564
- 3GPP: "3rd Generation Partnership Project;Technical Specification Group Radio Access Network; Evolved Universal Terrestrial Radio Access (E-UTRA); Stage 2 functional specification of User Equipment (UE) positioning in E-UTRAN (Release 9)", 3GPP DRAFT; TS 36.305 V1.1.0 REVISION MARKED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Kyoto; 20090813, 13 August 2009 (2009-08-13), XP050356387, [retrieved on 2009-08-13]
- "3rd Generation Partnership Project; Technical Specification Group Services and System Aspects; Evaluation of LCS Control Plane Solutions for EPS (Release 9)", 3GPP STANDARD; 3GPP TR 23.891, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V.0.3.0, 1 January 2009 (2009-01-01), pages 1-62, XP050380736,

## Description

### TECHNICAL FIELD

The disclosure relates to the location technology of a User Equipment (UE), particularly to a method and an apparatus for terminating a location process.

### BACKGROUND

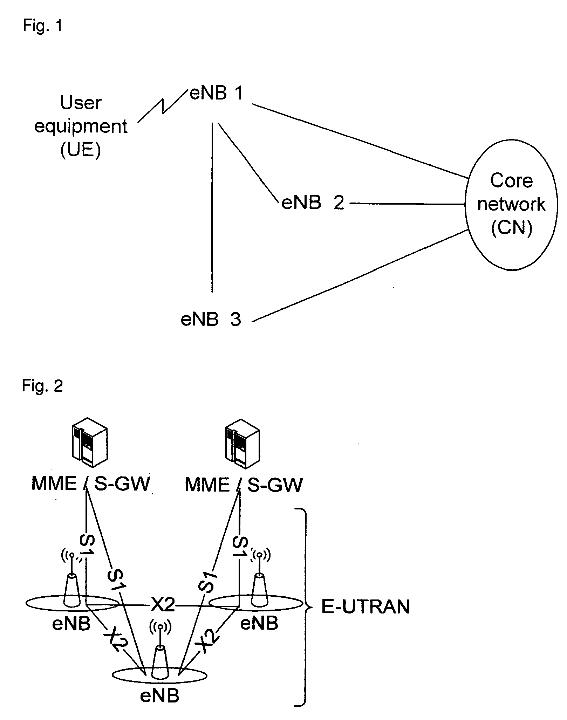

Fig. 1 is a structural schematic diagram of a cellular wireless communication system. As shown in Fig. 1, the cellular wireless communication system is mainly composed of a Core Network (CN), a Radio Access Network (RAN) and a UE. The CN is responsible for affairs in a non-access layer, for example, updating the location of a UE, etc., and the CN is an anchor point of a user plane. The RAN comprises an eNB (base station), or an eNB and an eNB controller. The RAN is responsible for affairs in an access layer, for example, managing radio resources, etc. There is a physical or logic connection between eNBs according to practical situations, for example, the connection between eNB 1 and eNB 2 or eNB 3 is shown in Fig. 1. Each eNB can be connected with more than one CN node. The UE refers to various devices capable of communicating with the cellular wireless communication network, such as a mobile phone or a notebook PC, etc.

Fig. 2 is a flattened architecture schematic diagram of an IP-based Long Term Evolution (LTE) cellular wireless communication system. As shown in Fig. 2, the LTE cellular wireless communication system is composed of an Evolved Universal Terrestrial Radio Access Network (E-UTRAN) and a CN node, and the CN node comprises a Mobility Management Entity (MME) and a Serving Gateway (S-GW), etc. The MME is responsible for the work related to the control plane such as mobility management, signaling procession in a non-access layer and management of mobile context management of user, and so on; the S-GW is responsible for transmission, forwarding and routing switch of data of user plane of a UE, and so on; The E-UTRAN comprises an Evolved-NodeB (eNB), and eNBs are logically connected with each other via X2 interface(s) for supporting the mobility of the UE within the entire network and for guaranteeing the seamless switching of the user.

To support providing location service, a network side has a network entity Serving Mobile Location Centre (SMLC), to be specifically configured to manage and configure location. While locating the UE, all location requests are sent to the SMLC via the MME, and the SMLC manages the eNB or the UE to perform location operations, for example, to perform location measurement and to report results.

After receiving a location request, the SMLC selects the eNB or the UE to perform location, and sends a location information request, auxiliary data of location that may be required and the like, to the eNB or the UE. After receiving the location information request sent by the SMLC, the eNB or the UE perform location measurement according to instructed content in the location information request, and report measurement results periodically or event-activatedly according to requirement, or directly report calculated location information.

US2007/155400A1 discloses a method of determining a location of a mobile terminal using a user identity module (UIM) includes issuing an instruction from the UIM to the mobile terminal instructing the mobile terminal to perform a positioning event and receiving position data from the mobile terminal responsive to the positioning event.

WO2007/002303A1 discloses a user equipment (UE) communicating with a radio access network (RAN) sends to a network entity (e.g., an MSC/SGSN) a request for periodic reporting of the UE location to a client entity. After the request is approved, the MSC/SGSN sends to the RAN signaling to initiate periodic location reporting for the UE. The RAN may request a positioning center (e.g., a SAS) to send assistance data to the UE. The RAN may coordinate and control the periodic location reporting or may pass the control over to the positioning center. For each location reporting, the UE sends location information (e.g., measurements made by the UE or a location estimate computed by the UE) to the RAN. The SAS computes a location estimate if the UE sends measurements. The RAN then sends the location estimate for the UE to the MSC/SGSN, which forwards the location estimate toward the client entity.

The document entitled "3rd Generation Partnership Project; Technical Specification Group Services and System Aspects; Evaluation of LCS Control Plane Solutions for EPS (Release 9)" discloses support of Intra E-UTRAN E-Node B Handover using X2 Interface, and introduces a procedure interrupts network based positioning without requiring any re-initiation of UE assisted or UE based positioning.

However, when the eNB or the UE is performing periodic report, the subject of requiring location such as a Location Service (LCS) entity in an Evolved Packet Core (EPC) thinks that sufficient terminal location information has been acquired or location information of the UE is no longer needed, or thinks that current location method is not enough precise so that the location method needs to be adjusted and updated, moreover, since the current periodic report fails to reach the maximum report number, it should be able to request to terminate the current location process. However, the common protocol does not relate to actively terminating location process of a UE.

### SUMMARY

In view of this, the disclosure mainly aims to provide a method and an apparatus for terminating a location process that enable location measurement for a UE to be terminated in advance, and avoid the loss of power resulted from unnecessary measurement for the UE.

To achieve the above purpose, the technical solution of the disclosure is realized as follows.

A method for terminating a location process comprises:
a Mobile Management Entity MME receives a request for terminating a location process for a User Equipment UE from the UE or an Evolved-NodeB eNB for currently serving the UE; after the MME receives the request for terminating a location process for a UE, the MME sends a location service terminating request to a Serving Mobile Location Center SMLC configured to manage and configure location, and after the SMLC receives the location service terminating request, the SMLC sends an instruction for terminating a location process to a network element that performs the location process.

Preferably, the request for terminating location for the UE may comprise a location service terminating request or a location process terminating request.

Preferably, the location process terminating instruction may be an independent message, or may be carried in a current message sent to the network element for currently performing location to inform the network element; and the location service terminating request or the location process terminating request may be an independent message, or may be carried in a current message sent to the SMLC to inform the SMLC.

Preferably, the current message for carrying the location process terminating instruction may comprise a message for requesting location information; and the current message for carrying the location service terminating request or the location process terminating request may comprise a message for providing location information.

Preferably, the network element for performing location may comprise the UE or an eNB for currently serving the UE.

A system for terminating a location process comprises: a UE or an Evolved-NodeB (eNB) for currently serving the UE, an MME, and an SMLC configured to manage and configure location, wherein
the UE or the eNB for currently serving the UE is configured to send a request for terminating a location process for a UE;
the MME is configured to, after the MME receives the request for terminating a location process for a UE, send a location service terminating request to the SMLC; and
the SMLC is configured to, after the SMLC receives the location service terminating request, send an instruction for terminating a location process to a network element that performs the location process.

Preferably, the request for terminating location for the UE may comprise a location service terminating request or a location process terminating request.

Preferably, the location process terminating instruction may be an independent message, or may be carried in a current message sent to the network element for performing location to inform the network element; and the location service terminating request or the location process terminating request may be an independent message, or may be carried in a current message sent to the SMLC to inform the SMLC.

Preferably, the current message for carrying the location process terminating instruction may comprise a message for requesting location information; and the current message for carrying the location service terminating request or the location
the location service terminating request or the location process terminating request may be an independent message, or may be carried in a current message sent to the SMLC to inform the SMLC.

Preferably, the current message for carrying the location process terminating instruction may comprise a message for requesting location information; and the current message for carrying the location service terminating request or the location process terminating requests may comprise a message for providing location information.

Preferably, the network element for performing location may comprise the UE or an eNB for currently serving the UE.

In the disclosure, when the UE or the eNB determines that there is no need to perform location service, it will send a request for terminating a location process for the UE to the network side, which sends an instruction for terminating a location process to the network element which is currently performing the location according to the request, so that the network element terminates the location process for the UE, thereby enabling the disclosure to support that the location measurement for the UE is terminated in advance, and avoiding the loss of power resulted from unnecessary measurement for the UE.

### BRIEF DESCRIPTION OF THE DRAWINGS

Fig. 1 is a structural schematic diagram of a cellular wireless communication system;
Fig. 2 is a flattened architecture schematic diagram of an I P-based long term evolution cellular wireless communication system;
Fig. 3 is a flowchart of a method for terminating a location process according to embodiment 1 of the disclosure;
Fig. 4 is a flowchart of a method for terminating a location process according to embodiment 2 of the disclosure;
Fig. 5 is a flowchart of a method for terminating a location process according to embodiment 3 of the disclosure;
Fig. 6 is a flowchart of a method for terminating a location process according to embodiment 4 of the disclosure; and
Fig. 7 is a structural schematic diagram of an apparatus for terminating a location process of the disclosure.

### DETAILED DESCRIPTION

The main idea of the disclosure is that: when a UE or an eNB determines that there is no need to perform location service, it will send a request for terminating a location process for the UE to a network side, which sends an instruction for terminating a location process to a network element which is currently performing the location according to the request so that the network element terminates the location process for the UE, so as to enable the disclosure to support that the location measurement for the UE is terminated in advance, and avoid the loss of power resulted from unnecessary measurement for the UE.

To make the purpose, technical solutions and advantages of the disclosure more clearly understood, the disclosure will be further described in details in the following embodiments in combination with drawings.

### Embodiment 1

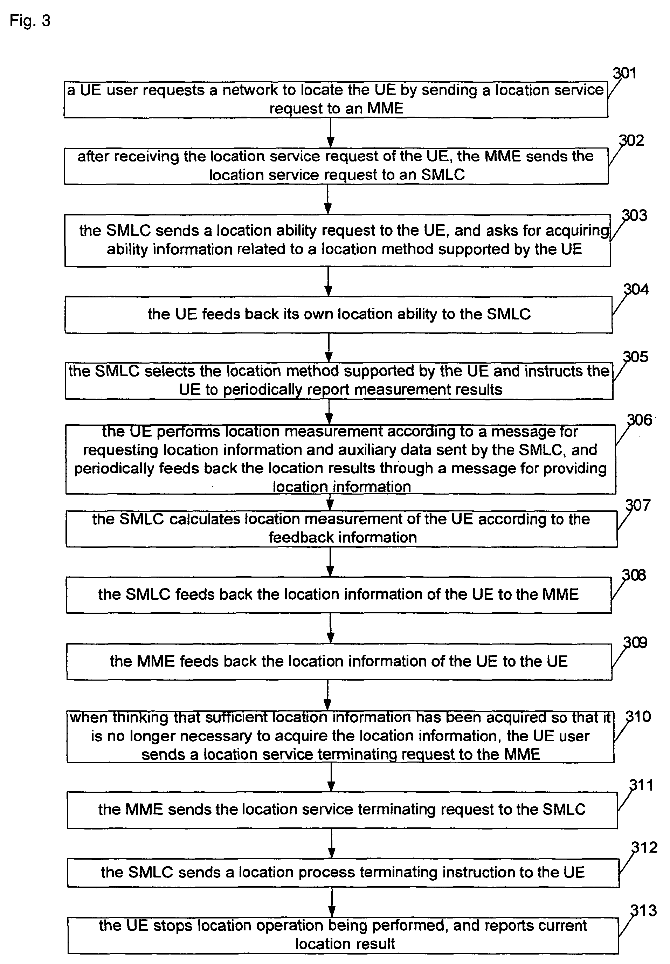

Fig. 3 is a flowchart of a method for terminating a location process according to embodiment 1 of the disclosure, as shown in Fig. 3, the method for terminating a location process comprises the following steps.

Step 301: a current service network of a UE provides a location service, and the UE user can request the network to locate the UE by sending a location service request to an MME.

Step 302: after receiving the location service request of the UE, the MME sends the location service request to an SMLC.

Step 303: the SMLC sends a location ability request to the UE, and asks for acquiring ability information related to a location method supported by the UE.

Step 304: after receiving the location ability request, the UE feeds back its own location ability to the SMLC.

Step 305: the SMLC selects the location method supported by the UE according to the location ability supported by the UE, configures auxiliary data required by the location method, sends the data together with a message for requesting location information to the UE, and instructs the UE to periodically report measurement results.

Step 306: the UE performs location measurement according to the message for requesting location information and the auxiliary data sent by the SMLC, and periodically feeds back the location results through a message for providing location information. Wherein, the feedback location results may be at least one result of measured satellite signal, time difference of arrival of eNBs, downlink signal of the eNB, and calculated location information of the UE.

Step 307: when receiving the satellite signal, the time difference of arrival of eNBs or the downlink signal of the eNB fed back by the UE, the SMLC calculates location information of the UE according to the feedback information.

Step 308: the SMLC feeds back the location information of the UE to the MME.

Step 309: the MME feeds back the location information of the UE to the UE.

Step 310: when thinking that sufficient location information has been acquired so that it is no longer necessary to acquire the location information, the UE user sends a location service terminating request, which is a new independent message entity with carrying a request identifier for terminating a location process, to the MME.

Step 311: the MME sends the location service terminating request to the SMLC.

Step 312: the SMLC sends a location process terminating instruction to the UE. Herein, the location process terminating instruction is a new independent message entity with carrying an instruction identifier for terminating a location process.

Step 313: after receiving the location process terminating instruction, the UE stops location operation being performed and reports current location result, or simply stops location operation being performed.

### Embodiment 2

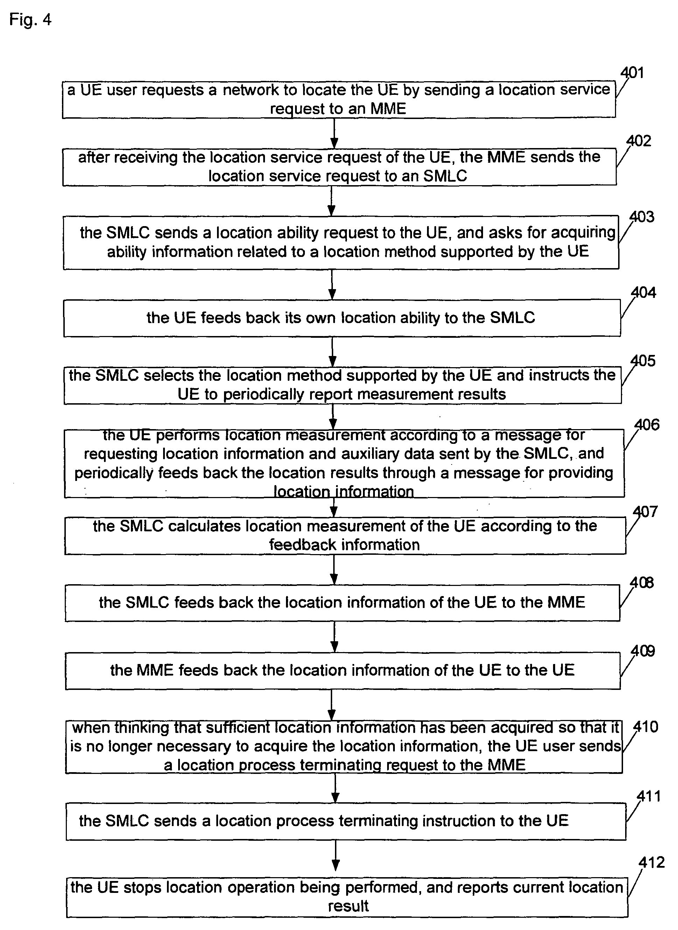

Fig. 4 is a flowchart of a method for terminating a location process according to embodiment 2 of the disclosure, as shown in Fig. 4, the method for terminating a location process comprises the following steps.

Step 401: a current service network of a UE provides a location service, and the UE user can request the network to locate the UE by sending a location service request to an MME.

Step 402: after receiving the location service request of the UE, the MME sends the location service request to an SMLC.

Step 403: the SMLC sends a location ability request to the UE, and asks for acquiring ability information related to a location method supported by the UE.

Step 404: after receiving the location ability request, the UE feeds back its own location ability to the SMLC.

Step 405: the SMLC selects the location method supported by the UE according to the location ability supported by the UE, configures auxiliary data required by the location method, sends the data together with a message for requesting location information to the UE, and instructs the UE to periodically report measurement results.

Step 406: the UE performs location measurement according to the message for requesting location information and the auxiliary data sent by the SMLC, and periodically feeds back the location results through a message for providing location information. Wherein, the feedback location results may be at least one result of measured satellite signal, time difference of arrival of eNBs, downlink signal of the eNB and calculated location information of the UE.

Step 407: when receiving the satellite signal, the time difference of arrival of eNBs or the downlink signal of the eNB fed back by the UE, the SMLC calculates location information of the UE according to the feedback information.

Step 408: the SMLC feeds back the location information of the UE to the MME.

Step 409: the MME feeds back the location information of the UE to the UE.

Step 410: when thinking that sufficient location information has been acquired so that it is no longer necessary to acquire the location information, the UE user sends a location process terminating request, which is a new independent message entity with carrying a request identifier for terminating a location process, to the SMLC.

Step 411: the SMLC sends a location process terminating instruction to the UE. Herein, the location process terminating instruction is a new independent message entity with carrying an instruction identifier for terminating a location process.

Step 412: after receiving the location process terminating instruction, the UE stops location operation being performed and reports current location result, or simply stops location operation being performed.

### Embodiment 3

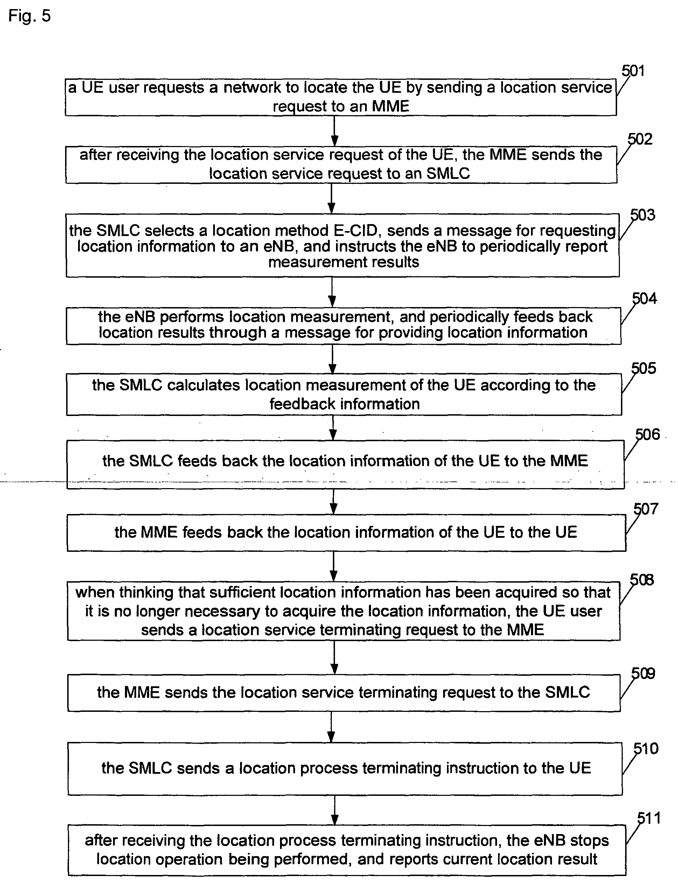

Fig. 5 is a flowchart of a method for terminating a location process according to embodiment 3 of the disclosure, as shown in Fig. 5, the method for terminating a location process comprises the following steps.

Step 501: a current service network of a UE provides a location service, and the UE user can request the network to locate the UE by sending a location service request to an MME.

Step 502: after receiving the location service request of the UE, the MME sends the location service request to an SMLC.

Step 503: the SMLC selects a location method Enhanced Cell Identify (E-CID), sends a message for requesting location information to an eNB, and instructs the eNB to periodically report measurement results.

Step 504: the eNB performs location measurement according to the message for requesting location information sent by the SMLC, and periodically feeds back the location results through a message for providing location information. Wherein, the feedback location results may be at least one result of measured timing advance of the UE, an angle of signal arrival and an uplink signal of the UE.

Step 505: after receiving the measurement results fed back by the eNB, the SMLC calculates location information of the UE according to the feedback information.

Step 506: the SMLC feeds back the location information of the UE to the MME.

Step 507: the MME feeds back the location information of the UE to the UE.

Step 508: when thinking that sufficient location information has been acquired so that it is no longer necessary to acquire the location information, the UE user sends a location service terminating request to the MME. Wherein, the location service terminating request is a new independent message entity with carrying a request identifier for terminating a location process.

Step 509: the MME sends the location service terminating srequest to the SMLC.

Step 510: the SMLC sends a location process terminating instruction to the eNB. Herein, the location process terminating instruction is a new independent message entity with carrying an instruction identifier for terminating a location process.

Step 511: after receiving the location process terminating instruction, the eNB stops location operation being performed and reports current location results, or simply stops location operation being performed.

### Embodiment 4

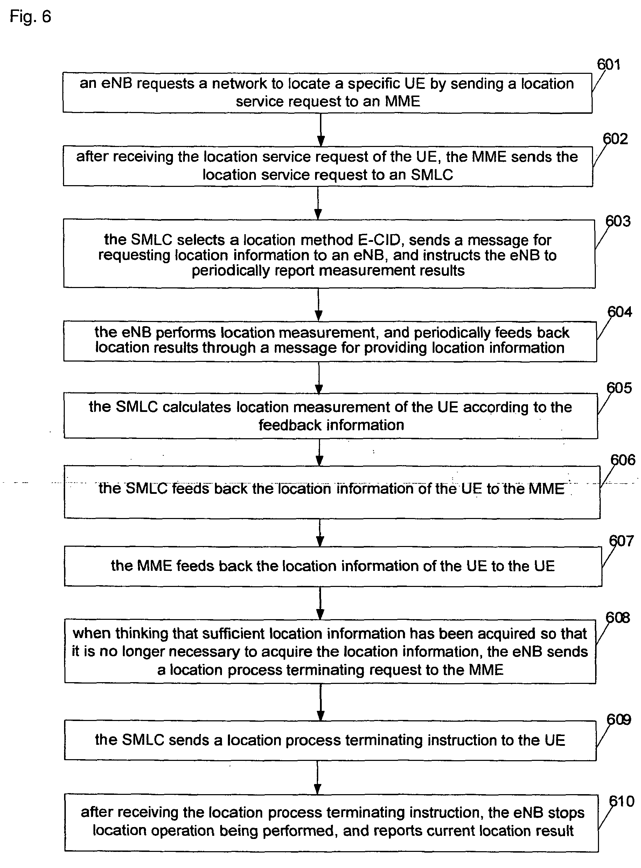

Fig. 6 is a flowchart of a method for terminating a location process according to embodiment 4 of the disclosure, as shown in Fig. 6, the method for terminating a location process comprises the following steps.

Step 601: an eNB requests a network to locate a specified UE by sending a location service request to an MME.

Step 602: after receiving the location service request of the eNB, the MME sends the location service request to an SMLC.

Step 603: the SMLC selects a location method E-CID, sends a message for requesting location information to the eNB, and instructs the eNB to periodically report measurement results.

Step 604: the eNB performs location measurement according to the message for requesting location information sent by the SMLC, and periodically feeds back the location results through a message for providing location information; wherein, the feedback location results may be at least one result of measured timing advance of the UE, an angle of signal arrival and an uplink signal of the UE.

Step 605: after receiving the measurement results fed back by the eNB, the SMLC calculates location information of the UE according to the feedback information.

Step 606: the SMLC feeds back the location information of the UE to the MME.

Step 607: the MME feeds back the location information of the UE to the eNB.

Step 608: when thinking that sufficient location information has been acquired so that it is no longer necessary to acquire the location information, the eNB sends a location process terminating request which is a new independent message entity with carrying a request identifier for terminating a location process, to the SMLC.

Step 609: the SMLC sends a location process terminating instruction to the eNB. Herein, the location process terminating instruction is a new independent message entity with carrying an instruction identifier for terminating a location process.

Step 610: after receiving the location process terminating instruction, the eNB stops location operation being performed and reports current location results, or simply stops location operation being performed.

Above embodiments 1-4 adopt a new signaling to terminate the location process, which does not exist in prior art. The disclosure also supports to adopt the signaling which exists in prior art to realize the technical solution of the disclosure. An information element is set to identify a termination of a location process and an instruction of a location process in the signaling which exists in prior art. The details are as follows: the signaling which the SMLC instructs the UE or the eNB to terminate the location process may be comprised in existed signaling sent by the SMLC to the UE or the eNB such as the message for requesting location information. The signaling for requesting the termination of a location process of the UE or the eNB may be comprised in an existed signaling sent by the UE or the eNB to the SMLC such as the message for providing location information. An information element can be respectively added in a message for location information and a message for providing location information, and be respectively configured to carry a signaling for instructing a termination of a location process and terminate a location process request.

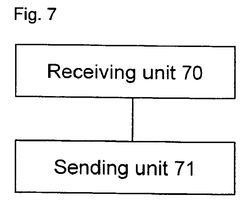

Fig. 7 is a structural schematic diagram of an apparatus for terminating a location process of the disclosure. As shown in Fig. 7, the apparatus for terminating a location process of the disclosure comprises: a receiving unit 70 and a sending unit 71, wherein the receiving unit 70 is configured to receive a request for terminating location for a UE; the sending unit 71 is configured to send a location process terminating instruction to a network element for currently performing the location, after receiving the request for terminating location for the UE, and enable the network element which is currently performing the location to terminate the current location process for the UE. The request for terminating location for the UE is sent to an SMLC by the UE, an eNB for currently serving the UE, or an MME. The request for terminating location for the UE comprises a location service terminating request or a location process terminating request. The location process terminating instruction is an independent message, or is carried in a current message sent to the network element for performing location to inform the network element; the location service terminating request or the location process terminating request is an independent message, or is carried in a current message sent to the SMLC to inform the SMLC. The current message for carrying the location process terminating instruction comprises a message for requesting location information; the current message for carrying the location service terminating request or the location process terminating request comprises a message for providing location information. The network element for performing location comprises the UE or an eNB which is currently serving the UE.

A person skilled in the field should understand that the apparatus for terminating a location process as shown in Fig. 7 is provided for realizing above-mentioned method for terminating a location process, each processing unit of the apparatus as shown in Fig. 7 can be understood in combination with the related description of above-mentioned embodiment 1 to 4, while its function may be realized through running the program on the processor, or be realized by the specific logic circuit.

The above is only the preferred embodiment of the disclosure and not intended to limit the scope of protection of the disclosure.

## Claims

1. A method for terminating a location process in a Long Term Evolution LTE system, **characterized in that**:
receiving, by a Mobile Management Entity MME, a request for terminating a location process for a User Equipment UE from the UE or an Evolved-NodeB eNB for currently serving the UE;
after the MME receives the request for terminating a location process for a UE, sending (311, 509), by the MME, a location service terminating request to a Serving Mobile Location Center SMLC configured to manage and configure location; and
after the SMLC receives the location service terminating request, sending (312, 411, 510, 609), by the SMLC, an instruction for terminating the location process to a network element that performs the location process.

2. The method according to claim 1, wherein the request for terminating location for the UE comprises a location service terminating request or a location process terminating request.

3. The method according to claim 2, wherein the location process terminating instruction is an independent message, or is carried in a current message sent to the network element for performing location to inform the network element; and
the location service terminating request or the location process terminating request is an independent message, or is carried in a current message sent to the SMLC to inform the SMLC;
wherein the current message for carrying the location process terminating instruction comprises a message for requesting location information; and
the current message for carrying the location service terminating request or the location process terminating request comprises a message for providing location information.

4. The method according to any one of claims 1 to 3, wherein the network element for performing location comprises the UE or an eNB for currently serving the UE.

5. A system for terminating a location process in a Long Term Evolution LTE system, **characterized in that** the system comprises: a User Equipment UE or an Evolved-NodeB eNB for currently serving the UE, a Mobile Management Entity MME, and a Mobile Location Center SMLC configured to manage and configure location, wherein
the UE or the eNB for currently serving the UE is configured to send a request for terminating a location process for a UE;
the MME is configured to, after the MME receives the request for terminating a location process for a UE, send a location service terminating request to the SMLC; and
the SMLC is configured to, after the SMLC receives the location service terminating request, send an instruction for terminating the location process terminating to a network element that performs the location process.

6. The system according to claim 5, wherein the request for terminating location for the UE comprises a location service terminating request or a location process terminating request.

7. The system according to claim 6, wherein the location process terminating instruction is an independent message, or is carried in a current message sent to the network element for performing location to inform the network element; and
the location service terminating request or the location process terminating request is an independent message, or is carried in a current message sent to the SMLC to inform the SMLC;
wherein the current message for carrying the location process terminating instruction comprises a message for requesting location information; and
the current message for carrying the location service terminating request or the location process terminating requests comprises a message for providing location information.

8. The system according to any one of claims 5 to 7, wherein the network element for performing location comprises the UE or an eNB for currently serving the UE.

## Patentansprüche

1. Verfahren für den Abschluss eines Lokalisierungsvorgangs in einem LTE (engl. Long Term Evolution)-System, **dadurch gekennzeichnet, dass**:
eine MME (engl. Mobility Management Entity) eine Anfrage für den Abschluss eines Lokalisierungsvorgangs für ein Endgerät (UE, engl. User Equipment) von dem UE oder einer Evolved-NodeB eNB, die das UE derzeit bedient, empfängt;
nachdem die MME die Anfrage für den Abschluss eines Lokalisierungsvorgangs für ein UE empfängt, die MME eine Anfrage für den Abschluss eines Lokalisierungsdienstes an ein SMLC (engl. Serving Mobile Location Center) sendet (311, 509), das zum Verwalten und Konfigurieren der Lokalisierung konfiguriert ist; und
nachdem das SMLC die Anfrage für den Abschluss des Lokalisierungsdienstes empfängt, das SMLC eine Anweisung sendet (312; 411, 510, 609), um den Lokalisierungsvorgang zu einem Netzelement, das den Lokalisierungsvorgang ausführt, abzuschließen.

2. Verfahren nach Anspruch 1, wobei die Anfrage für den Abschluss der Lokalisierung für das UE eine Anfrage für den Abschluss eines Lokalisierungsdienstes oder eine Anfrage für den Abschluss eines Lokalisierungsvorgangs empfängt.

3. Verfahren nach Anspruch 2, wobei die Anweisung für den Abschluss des Lokalisierungsvorgangs eine unabhängige Nachricht ist oder in einer aktuellen Nachricht, gesendet an das Netzelement zur Ausführung der Lokalisierung zum Informieren des Netzelements, übertragen wird; und
die Anfrage für den Abschluss des Lokalisierungsdienstes oder die Anfrage für den Abschluss des Lokalisierungsvorgangs eine unabhängige Nachricht ist oder in einer aktuellen Nachricht, gesendet an das SMLC zum Informieren des SMLC, übertragen wird;
wobei die aktuelle Nachricht zum Übertragen der Anweisung für den Abschluss des Lokalisierungsvorgangs eine Nachricht zum Anfragen von Lokalisierungsinformation umfasst; und
die aktuelle Nachricht zum Übertragen der Anfrage für den Abschluss des Lokalisierungsdienstes oder der Anfrage für den Abschluss des Lokalisierungsvorgangs eine Nachricht zur Bereitstellung von Lokalisierungsinformation umfasst.

4. Verfahren nach einem der Ansprüche 1 bis 3, wobei das Netzelement für die Ausführung der Lokalisierung das UE oder eine eNB für die aktuelle Bedienung des UE umfasst.

5. System für den Abschluss eines Lokalisierungsvorgangs in einem LTE-System, **dadurch gekennzeichnet, dass** das System umfasst: ein UE oder eine Evolved-NodeB eNB für die aktuelle Bedienung des UE, eine MME und ein SMLC, konfiguriert zur Verwaltung und Konfiguration der Lokalisierung, wobei
das UE oder die eNB für die aktuellen Bedienung des UE konfiguriert ist, eine Anfrage für den Abschluss eines Lokalisierungsvorgangs für ein UE zu senden;
die MME konfiguriert ist, um, nachdem die MME die Anfrage für den Abschluss eines Lokalisierungsvorgangs für ein UE empfängt, eine Anfrage für den Abschluss eines Lokalisierungsdienstes an das SMLC zu senden; und
das SMLC konfiguriert ist, um, nachdem das SMLC die Anfrage für den Abschluss des Lokalisierungsdienstes empfängt, eine Anweisung für den Abschluss des Lokalisierungsvorgangs an ein Netzelement, das den Lokalisierungsvorgang ausführt, zu senden.

6. System nach Anspruch 5, wobei die Anfrage für den Abschluss der Lokalisierung für das UE eine Anfrage für den Abschluss eines Lokalisierungsdienstes oder eine Anfrage für den Abschluss eines Lokalisierungsvorgangs umfasst.

7. System nach Anspruch 6, wobei die Anweisung für den Abschluss des Lokalisierungsvorgangs eine unabhängige Nachricht ist oder in einer aktuellen Nachricht, gesendet an das Netzelement für die Ausführung der Lokalisierung zum Informieren des Netzelements, übertragen wird; und
die Anfrage für den Abschluss des Lokalisierungsdienstes oder die Anfrage für den Abschluss des Lokalisierungsvorgangs eine unabhängige Nachricht ist oder in einer aktuellen Nachricht, gesendet an das SMLC zum Informieren des SMLC, übertragen wird;
wobei die aktuelle Nachricht zum Übertragen der Anweisung für den Abschluss des Lokalisierungsvorgangs eine Nachricht zum Anfragen von Lokalisierungsinformation umfasst; und
die aktuelle Nachricht zum Übertragen der Anfrage für den Abschluss des Lokalisierungsdienstes oder der Anfrage für den Abschluss des Lokalisierungsvorgangs eine Nachricht zur Bereitstellung von Lokalisierungsinformation umfasst.

8. System nach einem der Ansprüche 5 bis 7, wobei das Netzelement zur Ausführung der Lokalisierung das UE oder eine eNB für die aktuelle Bedienung des UE umfasst.

## Revendications

1. Procédé pour terminer un processus de localisation dans un système d'Evolution à Long Terme LTE, **caractérisé par** :
la réception, par une entité de gestion mobile MME, d'une demande pour terminer un processus de localisation pour un équipement utilisateur UE en provenance de l'UE ou un noeud B élaboré eNB destiné à desservir actuellement l'UE ;
une fois que la MME a reçu la demande pour terminer un processus de localisation pour un UE, l'envoi (311, 509), par la MME, d'une demande de fin de service de localisation à un centre de localisation mobile de desserte SMLC configuré pour gérer et configurer la localisation ; et
une fois que le SMLC a reçu la demande de fin de service de localisation, l'envoi (312, 411, 510, 609), par le SMLC, d'une instruction pour terminer le processus de localisation à un élément de réseau qui effectue le processus de localisation.

2. Procédé selon la revendication 1, dans lequel la demande pour terminer la localisation pour l'UE comprend une demande de fin de service de localisation ou une demande de fin de processus de localisation.

3. Procédé selon la revendication 2, dans lequel l'instruction de fin de processus de localisation est un message indépendant, ou est portée dans un message actuel envoyé à l'élément de réseau destiné à effectuer la localisation afin d'informer l'élément de réseau ; et
la demande de fin de service de localisation ou la demande de fin de processus de localisation est un message indépendant, ou est portée dans un message actuel envoyé au SMLC pour informer le SMLC ;
dans lequel le message actuel destiné à porter l'instruction de fin de processus de localisation comprend un message pour demander l'information de localisation ; et
le message actuel destiné à porter la demande de fin de service de localisation ou la demande de fin de processus de localisation comprend un message pour fournir l'information de localisation.

4. Procédé selon l'une quelconque des revendications 1 à 3, dans lequel l'élément de réseau destiné à effectuer la localisation comprend l'UE ou un eNB destiné à desservir actuellement l'UE.

5. Système pour terminer un processus de localisation dans un système d'Evolution à Long Terme LTE, **caractérisé en ce que** le système comprend : un équipement utilisateur UE ou un noeud B élaboré eNB destiné à desservir actuellement l'UE, une entité de gestion mobile MME, et un centre de localisation mobile SMLC configuré pour gérer et configurer la localisation, dans lequel
l'UE ou l'eNB destiné à desservir actuellement l'UE est configuré pour envoyer une demande pour terminer un processus de localisation pour un UE ;
la MME est configurée pour, une fois que la MME a reçu la demande pour terminer un processus de localisation pour un UE, envoyer une demande de fin de service de localisation au SMLC ; et
le SMLC est configuré pour, une fois que le SMLC a reçu la demande de fin de service de localisation, envoyer une instruction pour terminer le processus de localisation à un élément de réseau qui effectue le processus de localisation.

6. Système selon la revendication 5, dans lequel la demande pour terminer la localisation pour l'UE comprend une demande de fin de service de localisation ou une demande de fin de processus de localisation.

7. Système selon la revendication 6, dans lequel l'instruction de fin de processus de localisation est un message indépendant, ou est portée dans un message actuel envoyé à l'élément de réseau destiné à effectuer la localisation afin d'informer l'élément de réseau ; et
la demande de fin de service de localisation ou la demande de fin de processus de localisation est un message indépendant, ou est portée dans un message actuel envoyé au SMLC pour informer le SMLC ;
dans lequel le message actuel destiné à porter l'instruction de fin de processus de localisation comprend un message pour demander l'information de localisation ; et
le message actuel destiné à porter la demande de fin de service de localisation ou les demandes de fin de processus de localisation comprend un message pour fournir l'information de localisation.

8. Système selon l'une quelconque des revendications 5 à 7, dans lequel l'élément de réseau destiné à effectuer la localisation comprend l'UE ou un eNB destiné à desservir actuellement l'UE.
